# EUROPÄISCHE PATENTANMELDUNG

(11) **EP 3 210 823 A1**
(43) Veröffentlichungstag der Anmeldung: **30.08.2017**
(21) Anmeldenummer: 17150605.8
(22) Anmeldetag: 09.01.2017
(51) Int. Cl.: B60N 2/46

(54) **ARRETIERVORRICHTUNG FÜR EINE SCHWENKBEWEGLICHE KRAFTFAHRZEUG-ARMLEHNE**

(30) Priorität: 26.02.2016 DE 102016002214; 14.10.2016 DE 102016220152
(71) Anmelder: BOS GmbH & Co. KG, 73760 Ostfildern (DE)
(72) Erfinder: Boddenberg, Jan, 50674 Köln (DE); Bohlke, Hartmut, 42369 Wuppertal (DE); Göbbels, Andreas, 51515 Kürten (DE); Pink, Tanja, 42285 Wuppertal (DE); Sitzler, Wolfgang, 42111 Wuppertal (DE); Tutelea, Bogdan, 42799 Leichlingen (DE)
(74) Vertreter: Patentanwälte Ruff, Wilhelm, Beier, Dauster & Partner mbB

(57) **Zusammenfassung**

1. Arretiervorrichtung (8) für eine schwenkbewegliche Kraftfahrzeug-Armlehne (4).
2.1 Eine derartige Arretiervorrichtung (8) mit einer um eine Schwenkachse (A) schwenkbeweglichen Rastanordnung (9) und einer stationären Gegenrastanordnung (10), die zur Bereitstellung eines Schwenkwiderstandes zusammenwirken, wobei die Gegenrastanordnung (10) wenigstens zwei zu der Schwenkachse (A) radial beabstandete und in Umfangsrichtung voneinander entfernte Raststellen (12, 13) und eine zwischen den Raststellen (12, 13) erstreckte, kreisbogenförmige Gleitfläche (14) aufweist, die radial zur Schwenkachse (A) durch eine Widerstandsanordnung (18) elastisch nachgiebig abgestützt ist, ist bekannt.
2.2 Erfindungsgemäß ist die Gegenrastanordnung (10) mit den Raststellen (12, 13) und der Widerstandsanordnung (18) in einem einstückigen Kunststoffbauteil (15) integriert, das stationär angeordnet ist.
2.3 Einsatz für Personenkraftwagen.

## Beschreibung

Die Erfindung betrifft eine Arretiervorrichtung für eine schwenkbewegliche Kraftfahrzeug-Armlehne mit einer um eine Schwenkachse schwenkbeweglichen Rastanordnung und einer stationären Gegenrastanordnung, die zur Bereitstellung eines Schwenkwiderstandes zusammenwirken, wobei die Gegenrastanordnung wenigstens zwei zu der Schwenkachse radial beabstandete und in Umfangsrichtung voneinander entfernte Raststellen und eine zwischen den Raststellen erstreckte, kreisbogenförmige Gleitfläche aufweist, die radial zur Schwenkachse durch eine Widerstandsanordnung elastisch nachgiebig abgestützt ist.

Eine derartige Lagerung für eine schwenkbare Mittelarmlehne ist aus der Patentschrift DE 10 2010 051 699 B4 bekannt. Die bekannte Lagerung weist einen schwenkbeweglichen Rastbolzen und ein stationäres Reibrastelement auf. Das Reibrastelement weist an einem Umfang eine Gleitführungsfläche und zwei voneinander beabstandete, die Gleitführungsfläche begrenzende Rastungen auf, die die Raststellungen der Mittelarmlehne vorgeben. Zwischen dem Reibrastelement und einer Schwenkachse der Mittelarmlehne ist ein elastisch verformbares Federelement angeordnet, das in eine radiale Richtung auf die Gleitführungsfläche und somit auf den Rastbolzen wirkt. Bei einer Verlagerung des Rastbolzens entlang der Gleitführungsfläche bewirkt eine Federkraft des Federelements eine Reibkraft zwischen dem Rastbolzen und der Gleitführungsfläche des Reibrastelements, welche einen Schwenkwiderstand bewirkt.

Aufgabe der Erfindung ist es, eine Arretiervorrichtung der eingangs genannten Art zu schaffen, die eine einfache und kostengünstige Herstellung ermöglicht.

Diese Aufgabe wird dadurch gelöst, dass die Gegenrastanordnung mit den Raststellen und der Widerstandsanordnung in einem einstückigen Kunststoffbauteil integriert ist, das stationär angeordnet ist. Durch eine einstückige Bauweise der Gegenrastanordnung ergibt sich vorteilhaft ein verringerter Montageaufwand. Zudem wird einem Verlust oder einer Vertauschung von Elementen der Gegenrastanordnung vorgebeugt. Weiterhin stellt sich eine Kostenersparnis ein, da das einstückige Kunststoffbauteil in einem Arbeitsgang hergestellt werden kann, insbesondere mittels eines Spritzgussvorgangs.

In Ausgestaltung der Erfindung weist die Widerstandsanordnung eine geringere Materialstärke auf als die Gleitflächen und die Raststellen. Vorteilhaft ergibt sich daraus, dass die Widerstandsanordnung eine radiale Nachgiebigkeit in einem Bereich der Gleitflächen bereitstellt, mit welcher der Schwenkwiderstand der Kraftfahrzeug-Armlehne eingestellt werden kann. Die Materialstärke der Gleitflächen und der Raststellen in einer Erstreckungsrichtung quer zur Radialebene bezogen auf die Schwenkachse beträgt dabei ein Mehrfaches der Materialstärke der Widerstandsanordnung, sodass die Widerstandsanordnung bei einer radialen Belastung relativ stark elastisch deformiert wird und die Gleitflächen sowie die Raststellen relativ wenig.

In weiterer Ausgestaltung der Erfindung ist die Widerstandsanordnung durch mehrere, in Umfangsrichtung zueinander beabstandete Streben gebildet. Vorteilhaft kann über eine Auswahl der Materialstärke und einer Anzahl der radial verlaufenden Streben ein gewünschter Schwenkwiderstand gewählt werden. Die Streben können bei einer Belastung in eine Umfangsrichtung oder in eine Axialrichtung ausknicken oder sich auswölben. Bei einem geringen Bauraum kann die Ausknickung oder die Auswölbung der Streben in Umfangsrichtung vorteilhaft sein.

In weiterer Ausgestaltung der Erfindung ist die Widerstandsanordnung als in Umfangsrichtung durchgängige, teilkreisscheibenförmige Membran gestaltet. Vorteilhaft ergibt sich daraus eine einfache Gestaltung einer Spritzgussform und somit eine einfache Herstellung. Weiterhin vorteilhaft kann durch diese Ausgestaltung ein Eindringen von Verschmutzungen in die Kraftfahrzeug-Armlehne verhindert werden. Zudem kann durch die Ausgestaltung der Widerstandsanordnung als eine geschlossene Membran eine Sicht in ein Inneres der Kraftfahrzeug-Armlehne verwehrt sein, was als optisch ansprechend empfunden wird.

In weiterer Ausgestaltung der Erfindung weist die Widerstandsanordnung eine vorgegebene Sollwölbung auf, die ein definiertes Ausknicken oder Auswölben zu einer Axialrichtung hin gewährleistet. Dabei wird davon ausgegangen, dass die Widerstandsanordnung in einer Radialebene zu der Schwenkachse ausgerichtet ist. Die Sollwölbung ist demzufolge orthogonal zu der Radialebene ausgerichtet. Vorteilhaft lässt sich so insbesondere eine Ausknickung der Widerstandsanordnung in ein Inneres der Kraftfahrzeug-Armlehne gewährleisten, sodass eine ansprechende Optik in sämtlichen Betätigungspositionen der Kraftfahrzeug-Armlehne gegeben ist.

In weiterer Ausgestaltung der Erfindung weist die die Widerstandsanordnung wenigstens ein Festkörpergelenk auf, das ein definiertes Ausknicken zu einer Axialrichtung hin gewährleistet. Es wird davon ausgegangen, dass die Widerstandsanordnung in der Radialebene zu der Schwenkachse ausgerichtet ist, somit ist das Festkörpergelenk orthogonal zu der Radialebene ausgerichtet. Vorteilhaft kann somit ein Ausknicken der Widerstandsanordnung in das Innere der Kraftfahrzeug-Armelehne realisiert werden, was die ansprechende Optik gewährleistet. Weiterhin vorteilhaft kann die Widerstandsanordnung ein relativ biegesteifes, also wenig elastisches Material aufweisen und sich dennoch unter einer Belastung verformen.

In weiterer Ausgestaltung der Erfindung weist das Kunststoffbauteil eine formschlüssig wirksame Verdrehsicherung auf, um eine stationäre Sicherung des Kunststoffbauteils zu gewährleisten. Die Verdrehsicherung kann vorteilhaft eine Materialausnehmung sein, die mit einem Vorsprung in Form eines Bolzens, Nockens, Stegs oder ähnlichem mit einer Tragstruktur eines Fahrzeugsitzes zusammenwirkt, an der die Armlehne gelagert ist. Somit sind bei einer drehgesicherten Fixierung des Kunststoffbauteils an der Tragstruktur keine weiteren Befestigungsmittel nötig, um eine einwandfreie Funktion der Verdrehbarkeit der Armlehne zu bewirken. Vorteilhaft ergibt sich dadurch eine definierte Winkelstellung des Kunststoffbauteils und somit auch der Raststellen relativ zu der Tragstruktur, insbesondere in einem Bereich einer Rückenlehne des Fahrzeugsitzes.

In weiterer Ausgestaltung der Erfindung weist das Kunststoffbauteil koaxial zu der Schwenkachse eine Nabe auf, die auf einem Achsbolzen der Schwenkachse aufgesteckt ist. Somit ist eine sichere und gleichbleibende Ausrichtung zur Schwenkachse gewährleistet.

Weitere Merkmale und Vorteile der Erfindung ergeben sich aus den Ansprüchen und der folgenden Beschreibung von bevorzugten Ausführungsformen der Erfindung in Zusammenhang mit den Zeichnungen. Einzelmerkmale der beschriebenen oder gezeigten Ausführungsformen lassen sich dabei in beliebiger Weise miteinander kombinieren, ohne den Rahmen der Erfindung zu überschreiten. In den Zeichnungen zeigen:
- Fig. 1: einen Kraftfahrzeugausschnitt mit einer schwenkbeweglichen KraftfahrzeugArmlehne eines Fahrzeugsitzes in einer Gebrauchsposition,
- Fig. 2: eine gebrochene Ansicht der in Fig. 1 gezeigten Kraftfahrzeug-Armlehne mit einer Ausführungsform einer erfindungsgemäßen Arretiervorrichtung,
- Fig. 3: eine Seitenansicht eines Kunststoffbauteils der Arretiervorrichtung von Fig. 2 mit einer Widerstandsanordnung, die als Membran ausgeführt ist,
- Fig. 4: eine Schnittdarstellung des in Fig. 3 gezeigten Kunststoffbauteils entlang einer Schnittlinie IV-IV,
- Fig. 5: eine Seitenansicht eines weiteren Kunststoffbauteils gemäß einer weiteren Ausführungsform einer erfindungsgemäßen Arretiervorrichtung mit einer Widerstandsanordnung, die mit radialen Streben ausgeführt ist,
- Fig. 6a: eine Schnittdarstellung einer dritten Ausführungsform des Kunststoffbauteils entlang der Schnittlinie IV-IV von Fig. 3,
- Fig. 6b: eine Schnittdarstellung einer vierten Ausführungsform eines Kunststoffbauteils entlang der Schnittlinie IV-IV von Fig. 3 und
- Fig. 6c: eine Schnittdarstellung einer fünften Ausführungsform des Kunststoffbauteils entlang der Schnittlinie IV-IV von Fig. 3.

Ein Kraftfahrzeug, beispielsweise ein Personenkraftwagen, weist einen Fahrzeuginnenraum auf, in welchem frontseitig Fahrzeugsitze 1 angeordnet sind. Fondseitig können zusätzlich weitere Fahrzeugsitzstrukturen vorhanden sein. Die frontseitigen Fahrzeugsitze 1 weisen jeweils eine formstabile Tragstruktur auf, die eine Basis für eine Sitzfläche 2 und eine Rückenlehne 3 des Fahrzeugsitzes 1 bildet. Die Rückenlehne 3 ist relativ zu der Sitzfläche 2 schwenkbar. Die Sitzfläche 2 und die Rückenlehne 3 sind in einem einem Benutzer zugewandten Bereich gepolstert und mit einem Bezug bezogen. Jeder Fahrzeugsitz 1 weist wenigstens eine Kraftfahrzeug-Armlehne 4 auf. Es können ebenso jeweils zwei Kraftfahrzeug-Armlehnen 4 an einem jeweiligen Fahrzeugsitz 1 angeordnet sein, einer auf jeder Seite des Fahrzeugsitzes 1.

Jede Kraftfahrzeug-Armlehne 4 weist einen Armlehnenkörper 5 zur Armauflage für einen Benutzer auf, der zwischen zwei Endpositionen, einer Gebrauchsposition und einer Ruheposition, mittels einer Schwenklagerung verschwenkbar ist. Die Schwenklagerung ist mit der Tragstruktur und mit dem Armlehnenkörper 5 verbunden.

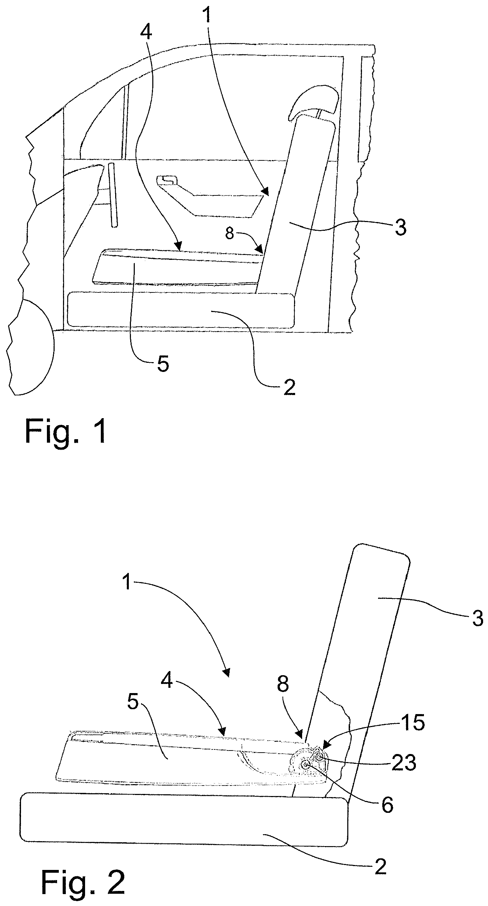

In der Gebrauchsposition gemäß Fig. 1 ist der Armlehnenkörper 5 annähernd horizontal ausgerichtet und erstreckt sich in eine Fahrzeuglängsrichtung. In der nicht gezeigten Ruheposition ist der Armlehnenkörper 5 annähernd parallel zur Rückenlehne 3 des jeweiligen Fahrzeugsitzes 1 ausgerichtet und erstreckt sich in eine Fahrzeughochrichtung.

An einer Verbindungsstelle zwischen dem Armlehnenkörper 5 und der Rückenlehne 3 ist gemäß Fig. 2 eine Arretiervorrichtung 8 für die schwenkbewegliche Kraftfahrzeug-Armlehne 4 angeordnet. Mit der Arretiervorrichtung 8 kann der Armlehnenkörper 5 in zwei Positionen festgelegt und zwischen diesen Positionen verschwenkt werden. Der Armlehnenkörper 5 ist schwenkbeweglich an einem Achsbolzen 6 angeordnet, welcher Teil der Schwenklagerung und drehfest mit der Rückenlehne 3 verbunden ist. Der Achsbolzen 6 und eine Schwenkachse A des Armlehnenkörpers 5 erstrecken sich in eine Fahrzeugquerrichtung, der Armlehnenkörper 5 ist orthogonal zur Schwenkachse A um diese schwenkbar angeordnet.

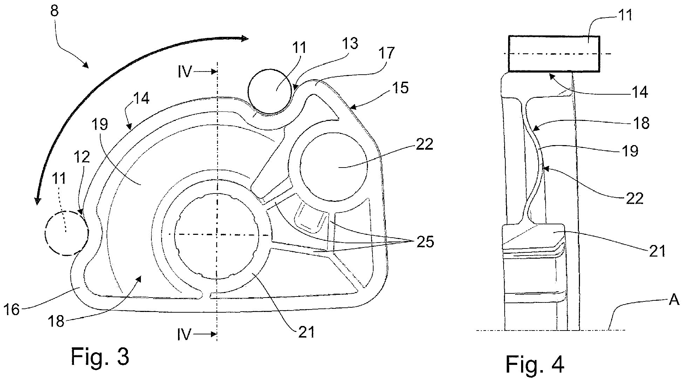

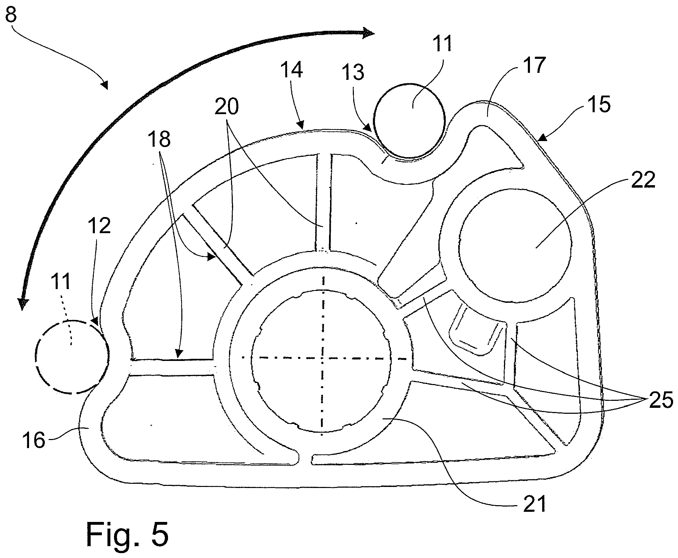

Die Arretiervorrichtung 8 weist gemäß den Fig. 3 und 5 eine schwenkbewegliche Rastanordnung 9 und eine stationäre Gegenrastanordnung 10 auf. Die Gegenrastanordnung 10 ist verdrehsicher an der Tragstruktur der Rückenlehne 3 befestigt, die Rastanordnung 9 ist mit dem Armlehnenkörper 5 um den Achsbolzen 6 und somit um die Schwenkachse A schwenkbar angeordnet. Die schwenkbewegliche Rastanordnung 9 ist hier in Form eines Rastbolzens 11 dargestellt. Der Rastbolzen 11 ist mit dem Armlehnenkörper 5 schwenkbar und kann somit zwischen zwei Raststellen 12, 13 verlagert werden. Die Raststellen 12, 13 sind als nach oben offene Vertiefungen mit kreisbogenförmigen Querschnitt an der Gegenrastanordnung 10 ausgeführt und auf den Querschnitt des Rastbolzens 11 abgestimmt.

In einer Betrachtungsebene der Fig. 3 und 5 weist die Gegenrastanordnung, hier als ein einstückiges Kunststoffbauteil 15 dargestellt, in einem oberen Bereich eine Gleitfläche 14 auf, welche annähernd einen Kreisbogen in radialem Abstand zur Schwenkachse A beschreibt. Die Gleitfläche 14 wird von den beiden Raststellen 12, 13 begrenzt. Die Raststellen 12, 13 werden jeweils von einem erhöhten Anschlag 16, 17 begrenzt, welcher jeweils an einem der Gleitfläche 14 abgewandten Bereich der Raststellen 12, 13 angeordnet ist. Die Begrenzung durch die Anschläge 16, 17 dient dem Zweck, dass der schwenkbewegliche Rastbolzen 11 und somit der Armlehnenkörper 5 auch bei einer Belastung wie bspw. einem von dem Benutzer abgelegten Arm nicht über seine Endpositionen hinaus geschwenkt werden kann.

In einem Bereich zwischen der Gleitfläche 14 und der Schwenkachse A erstreckt sich in einer Radialebene zu der Schwenkachse A eine Widerstandsanordnung 18. Gemäß den Fig. 3 und 4 weist die Widerstandsanordnung 18 eine durchgängige teilkreisscheibenförmige Membran 19 auf. In Fig. 5 handelt es sich bei der Widerstandsanordnung 18 um radial verlaufende Streben 20. Beide Ausführungsformen der Widerstandsanordnung 18 sind jeweils mit einer Gleitfläche 14 und einer Nabe 21 verbunden. Über die Nabe 21 ist das Kunststoffbauteil 15 auf den Achsbolzen 6 aufgesteckt.

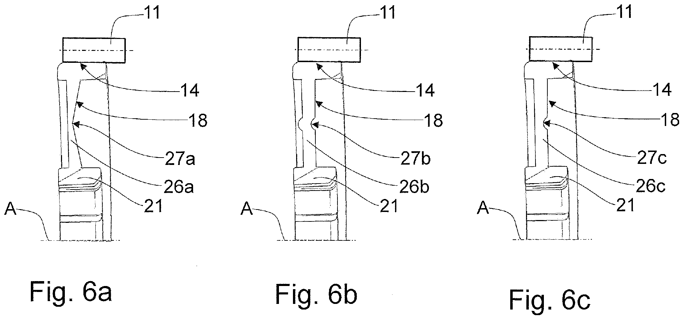

In den Fig. 6a, 6b, 6c ist jeweils eine Widerstandsanordnung 18 gezeigt. In den Ausführungsbeispielen der Fig. 6a, 6b, 6c weist die Widerstandsanordnung 18 Festkörpergelenke 26a, 26b, 26c auf. Die Festkörpergelenke 26a, 26b, 26c erstrecken sich jeweils radial zwischen der Nabe 21 und der Gleitfläche 14 und weisen eine Sollknickstelle 27a, 27b, 27c auf. Die Sollknickstelle 27a, 27b, 27c ist ein Abschnitt mit einer verringerten Steifigkeit, die insbesondere durch einen verringerten Materialquerschnitt der Widerstandsanordnung 18 bereitgestellt wird. In der Fig. 6a ist die Sollknickstelle 27a zwischen zwei keilförmigen Abschnitten angeordnet, die sich zur Sollknickstelle 27a hin verjüngen. In der Fig. 6b ist die Sollknickstelle 27b in einer Betrachtungsebene der Fig. 6b als eine Auswölbung der Widerstandsanordnung 18 nach links ausgeführt. In der Fig. 6c weist die Widerstandsanordnung 18 in einer Betrachtungsebene der Fig. 6c in einem mittleren Abschnitt eine Kerbe auf, die auf einer rechten Seite der Widerstandsanordnung 18 angeordnet ist

In einer Erstreckungsrichtung quer zu der Radialebene der Widerstandsanordnung 18 weisen die Gleitfläche 14 und die Nabe 21 eine annähernd gleiche Materialstärke auf. Die sich dazwischen erstreckende Widerstandsanordnung 18 weist eine wesentlich geringere Materialstärke auf. Dadurch ist eine radiale Nachgiebigkeit gegeben, da bei einer Belastung der Gleitfläche 14 durch den Rastbolzen 11 die Widerstandsanordnung 18 elastisch deformiert wird. Querschnitte der Gleitfläche 14 und der Nabe 21 sind in etwa gleich breit. In Relation zu einem Querschnitt der Widerstandsanordnung 18 sind sie wesentlich breiter und betragen in den dargestellten Ausführungsbeispielen ein Mehrfaches des Querschnitts der Widerstandsanordnung 18.

In der Betrachtungsebene der Fig. 3 und 5 ist rechts oberhalb der Nabe 21 eine Verdrehsicherung 22 angeordnet, welche hier als Materialausnehmung realisiert ist. Anhand der Fig. 2 ist zu erkennen, dass die Nabe 21 der Gegenrastanordnung 10 auf den mit der Tragstruktur der Rückenlehne 3 verbundenen Achsbolzen 6 aufgesteckt ist und die Materialausnehmung der Verdrehsicherung 22 auf einen mit der Tragstruktur der Rückenlehne 3 verbundenen Sicherungsbolzen 23 aufgesteckt ist. Somit ist die Gegenrastanordnung gegen eine Verdrehung gegenüber der Rückenlehne 3 gesichert.

Die Gegenrastanordnung 10 mit der Gleitfläche 14, den Raststellen 12, 13, der Widerstandsanordnung 18, der Nabe 21 und der Verdrehsicherung 22 ist als das einstückige Kunststoffbauteil 15 ausgeführt. Zwischen der Nabe 21 und der Verdrehsicherung 22 sind Versteifungsrippen 25 angeordnet, da in diesem Bereich keine Nachgiebigkeit gewünscht ist.

Als Materialien für das Kunststoffbauteil 15 eignen sich insbesondere Thermoplatte, thermoplastische Elastomere sowie Elastomere oder ein Materialverbund aus wenigstens zwei dieser Materialien.

Die Fig. 3 und 5 zeigen die schwenkbewegliche Rastanordnung 9 in Form des Rastbolzens 11 in zwei unterschiedlichen Positionen. Der in den Fig. 3 und 5 gestrichelt dargestellte Rastbolzen 11 zeigt die Lage des Rastbolzens 11 in der Gebrauchsposition des Armlehnenkörpers 5. Der mittels einer Volllinie dargestellte Rastbolzen 11 zeigt die Lage des Rastbolzens 11 in der Ruheposition des Armlehnenkörpers 5.

Um die Kraftfahrzeug-Armlehne 4 aus der Ruheposition in die Gebrauchsposition zu verlagern, greift der Benutzer den Armlehnenkörper 5 und schwenkt diesen aus einer vertikalen Position um die Schwenkachse A in eine horizontale Position. Mit dem Armlehnenkörper 5 fest verbunden ist der Rastbolzen 11, welcher somit ebenfalls aus einer ersten Raststelle 12 verlagert wird und über die Gleitfläche 14 gleitet. Die Gleitfläche 14 wird elastisch deformiert und wirkt dabei deformierend auf die Widerstandsanordnung 18. Diese ist in Fig. 3 als Membran 19 gezeigt und in Fig. 5 in Form von radial angeordneten Stegen 20 ausgeführt.

In Fig. 4 ist gezeigt, wie sich die Membran 19 bei einer radialen Belastung durch den Rastbolzen 11 an einer Sollwöllbung 24 in eine Axialrichtung wölbt. Die Sollwölbung 24 gibt durch ihre Form eine Richtung vor, in welche sich die Widerstandsanordnung 18 wölbt. Im gezeigten Ausführungsbeispiel wölbt sich die Membran 19 unter der radialen Belastung in einer Betrachtungsebene der Fig. 4 nach rechts. Die deformierte Widerstandsanordnung 18, also die Membran 19 oder die Stege 20, wirkt wie eine in eine Radialrichtung vorgespannte Druckfeder in Richtung des Rastbolzens 11 auf die Gleitfläche 14, welche den Schwenkwiderstand in Form eines Reibwiderstandes zwischen der Gleitfläche 14 und dem Rastbolzen 11 für die Kraftfahrzeug-Armlehne 4 bereitstellt. Bei Erreichen der Gebrauchsposition wird dem Benutzer durch eine Reduzierung des Schwenkwiderstandes angezeigt, dass die Gebrauchslage erreicht ist. Der Schwenkwiderstand fällt in Bereichen der Raststellen 12, 13 ab, da der radiale Abstand bezogen auf die Schwenkachse A dort geringer ist als in einem Bereich der Gleitfläche 14. Entsprechend ist in den Bereichen der Raststellen 12, 13 die Deformation geringer, und es wirkt eine geringere Federwirkung der Widerstandanordnung 18 auf die Gleitfläche 14 und somit auf den Rastbolzen 11, also wirkt ein geringerer Reibwiderstand zwischen der Gleitfläche 14 und dem Rastbolzen 11. Dies bewirkt die für den Benutzer spürbare Reduzierung des Schwenkwiderstands. Ein weiteres Verschwenken wird durch den Anschlag 16 verhindert.

Um die Kraftfahrzeug-Armlehne 4 aus der Gebrauchsposition in die Ruheposition zu verlagern, greift die Bedienperson den Armlehnenkörper 5 und schwenkt diesen aus der horizontalen Position in die vertikale Position. Der Rastbolzen 11 gleitet dabei aus der zweiten Raststelle 13 an der Gleitfläche 14 entlang und rastet in die erste Raststelle 12 ein. Der Rastbolzen 11 sichert nun in Verbindung mit der ersten Raststelle 12 die Kraftfahrzeug-Armlehne 4 gegen ein willkürliches Verschwenken in die Gebrauchsposition. Der Anschlag 17 verhindert das Verschwenken des Armlehnenkörpers 5 über die Ruheposition hinaus.

Alternativ kann die Kraftfahrzeug-Armlehne 4 auch elektrisch, pneumatisch oder hydraulisch verschwenkbar sein. Weiterhin kann die Widerstandsanordnung auch mehr als zwei Raststellen aufweisen, sodass eine Feineinstellung mittels der Raststellen möglich ist.

## Patentansprüche

1. Arretiervorrichtung (8) für eine schwenkbewegliche Kraftfahrzeug-Armlehne (4) mit einer um eine Schwenkachse (A) schwenkbeweglichen Rastanordnung (9) und einer stationären Gegenrastanordnung (10), die zur Bereitstellung eines Schwenkwiderstandes zusammenwirken, wobei die Gegenrastanordnung (10) wenigstens zwei zu der Schwenkachse (A) radial beabstandete und in Umfangsrichtung voneinander entfernte Raststellen () und eine zwischen den Raststellen (12, 13) erstreckte, kreisbogenförmige Gleitfläche (14) aufweist, die radial zur Schwenkachse (A) durch eine Widerstandsanordnung (18) elastisch nachgiebig abgestützt ist, **dadurch gekennzeichnet, dass** die Gegenrastanordnung (10) mit den Raststellen (12, 13) und der Widerstandsanordnung (18) in einem einstückigen Kunststoffbauteil (15) integriert ist, das stationär angeordnet ist.

2. Arretiervorrichtung nach Anspruch 1, **dadurch gekennzeichnet, dass** die Widerstandsanordnung (18) eine geringere Materialstärke aufweist als die Gleitfläche (14) und die Raststellen (12, 13).

3. Arretiervorrichtung nach Anspruch 2, **dadurch gekennzeichnet, dass** die Widerstandsanordnung (18) durch mehrere, in Umfangsrichtung zueinander beabstandete Streben (20) gebildet ist.

4. Arretiervorrichtung nach Anspruch 2, **dadurch gekennzeichnet, dass** die Widerstandsanordnung (18) als in Umfangsrichtung durchgängige, teilkreisscheibenförmige Membran (19) gestaltet ist.

5. Arretiervorrichtung nach Anspruch 4, **dadurch gekennzeichnet, dass** die Widerstandsanordnung (18) eine vorgegebene Sollwölbung (24) aufweist, die ein definiertes Ausknicken oder Auswölben zu einer Axialrichtung hin gewährleistet.

6. Arretiervorrichtung nach Anspruch 4, **dadurch gekennzeichnet, dass** die Widerstandsanordnung (18) wenigstens ein Festkörpergelenk (26a, 26b, 26c) aufweist, das ein definiertes Ausknicken zu einer Axialrichtung hin gewährleistet.

7. Arretiervorrichtung nach einem der vorhergehenden Ansprüche, **dadurch gekennzeichnet, dass** das Kunststoffbauteil (15) eine formschlüssig wirksame Verdrehsicherung (22) aufweist, um eine stationäre Sicherung des Kunststoffbauteils (15) zu gewährleisten.

8. Arretiervorrichtung nach Anspruch 4, **dadurch gekennzeichnet, dass** das Kunststoffbauteil (15) koaxial zu der Schwenkachse (A) eine Nabe (21) aufweist, die auf einem Achsbolzen (6) der Schwenkachse (A) aufgesteckt ist.

9. Kraftfahrzeug-Armlehne (4) mit einem Armlehnenkörper (5), der mittels einer Schwenklagerung um eine Schwenkachse (A) schwenkbar gelagert ist, **dadurch gekennzeichnet, dass** der Schwenklagerung eine Arretiervorrichtung (8) nach einem der vorhergehenden Ansprüche zugeordnet ist.
